(19) Europäisches Patentamt
European Patent Office
Office européen des brevets

(11) **EP 1 716 343 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(21) Anmeldenummer: 05715418.9

(22) Anmeldetag: **21.02.2005**

(51) Int Cl.:
***F16C 33/12*** *(2006.01)*

(86) Internationale Anmeldenummer:
**PCT/EP2005/001766**

(87) Internationale Veröffentlichungsnummer:
**WO 2005/080811 (01.09.2005 Gazette 2005/35)**

(54) **GLEITLAGERWERKSTOFF**

SLIDE BEARING MATERIAL

MATERIAU DE PALIER COULISSANT

(84) Benannte Vertragsstaaten:
**DE FR GB**

(30) Priorität: **21.02.2004 DE 102004008630**

(43) Veröffentlichungstag der Anmeldung:
**02.11.2006 Patentblatt 2006/44**

(73) Patentinhaber: **KS Gleitlager GmbH**
**68789 St. Leon-Rot (DE)**

(72) Erfinder:
• **SCHUBERT, Werner**
**69168 Wiesloch (DE)**

• **BICKLE, Wolfgang**
**68799 Reilingen (DE)**
• **STRIFLER, Adam**
**68789 St. Leon-Rot (DE)**

(74) Vertreter: **Friz, Oliver**
**Dreiss Patentanwälte**
**Postfach 10 37 62**
**70032 Stuttgart (DE)**

(56) Entgegenhaltungen:
**EP-A- 0 005 560    EP-A- 0 224 619**
**WO-A-03/033194    GB-A- 2 355 016**
**US-A- 4 394 275**

**Beschreibung**

Die Erfindung betrifft einen Gleitlagerwerkstoff mit einer metallischen Stützschicht und einer metallischen bleifreien Lagermetallschicht aus dichtgesinterten Pulverpartikeln aus Zinnbronze mit Zusätzen von Wismut.

Gleitlagerwerkstoffe und hieraus hergestellte Gleitlager sind vielfach bekannt geworden. Es wurden in der Vergangenheit Lagermetallschichten aus bleihaltiger Zinnbronze verwendet, z.B. CuSn10Pb10. Nach und nach setzt sich jedoch die Forderung nach bleifreien Lagerwerkstoffen durch.

Aus WO 03/031102 A1 ist beispielsweise ein bleifreier Gleitlagerwerkstoff bekannt, bei dem eine zunächst porös aufgesinterte Schicht zur Bildung der Gleitschicht vollständig verdichtet wird. Die Zusammensetzung des Gleitschichtmaterials umfasst 8 bis 12 Gew.-% Zinn, 1 bis weniger als 5 Gew.-% Wismut, 0,03 bis 0,08 Gew.-% Phosphor, Rest Kupfer und ist daher gattungsgemäß. Nach der Lehre dieser Druckschrift soll die Schicht aus einer Mischung unterschiedlicher Partikel verschiedener Zusammensetzung hergestellt werden, jedoch derart, dass im vollständig verdichteten Zustand der Gleitschicht ein Anteil von 5 Gew.% Wismut nicht überschritten wird, da dies die Matrixstruktur des Gleitschichtmaterials schwäche.

Aus EP 0 687 740 B1 ist ein bleifreies Lagermetall bekannt, welches als Monometall zur Bildung von Gleitelementen vergossen wird. Die bleifreie Zusammensetzung umfasst als Hauptbestandteile 4,85 bis 9 Gew.-% Zinn und 3,81 bis 9 Gew.-% Wismut und Rest Kupfer.

Aus EP 0 224 619 B1 ist eine Anzahl von zum Teil breifreien Lagermetalllegierungen bekannt, die 0,5 bis 4 Gew.-% Zinn, 10 bis 20 Gew.-% Wismut und 0 bis 1 Gew.-% Blei und andere sowie als Rest Kupfer aufweisen. Die Lagerlegierung kann durch Aufsintern, Aufgießen oder Aufwalzen auf eine Stützschicht aus Stahl aufgebracht werden.

Der vorliegenden Erfindung liegt die Aufgabe zugrunde, einen bleifreien Gleitlagerwerkstoff der eingangs genannten Art mit dennoch guten tribologischen Eigenschaften und hoher Tragfähigkeit und für hohe Geschwindigkeiten, wie zum Beispiel für Pleuellageranwendungen oder für Hautlageranwendungen bei Motoren, zu schaffen.

Diese Aufgabe wird bei einem Gleitlagerwerkstoff der genannten Art erfindungsgemäß dadurch gelöst, dass die Lagermetallschicht aus einem Sinterpulver gebildet ist, welches aus Pulverpartikeln besteht, die 9,5-11 Gew.-% Zinn und 7-13 Gew.-% Wismut, 0 - 4,0 Gew-% Zink und Rest Kupfer und ggf. verunreinigungsbedingte Zusätze in der Gesamtmenge von weniger als 1 Gew.-% umfassen, und dass die Pulverpartikel eine von der regelmäßigen Kugelform abweichende knollige Form jedoch ohne Kanten und Hinterschnitte aufweisen

Es wurde erfindungsgemäß erkannt, dass bei dem hier in Rede stehenden Gleitlagerwerkstoff durch einen hohen Wismutgehalt im beanspruchten Bereich eine hervorragende Fresssicherheit erreicht werden kann, und zwar ohne, dass die Tragfähigkeit des Gleitlagerwerkstoffs herabgesetzt wird. Das Wismut liegt wie Blei als separate Phase vor und wirkt aufgrund des ebenfalls niedrigen Schmelzpunkts temperaturstabilisierend und ferner als Schmierstoff. Es zeigte sich, dass das Tragvermögen der dichtgesinterten Lagermetallschicht durch den hohen Wismutanteil nicht zu sehr negativ beeinflusst wird, wenn die Pulverpartikel des Sinterpulvers nicht sphärisch sondern hiervon abweichend knollig ausgebildet sind und alle aus derselben Legierungszusammensetzung bestehen. Dies gewährleistet einen homogenen Aufbau der dichtgesinterten Lagermetallschicht mit gleichmäßig verteilten Ausscheidungen des Schmierstoffs Wismut. Es hat sich gezeigt, dass sich erst durch den Zusatz von Wismut im beanspruchten Bereich ein bleifreies knollenförmiges Sinterpulver herstellen lässt. Es zeigte sich überraschenderweise ferner, dass bei einer aus knolligen Sinterpulverpartikeln dichtgesinterten Lagermetallschicht Tragfähigkeiten und Belastbarkeiten bei sehr hohen Wismutgehalten erreicht werden, die bei Verwendung von sphärischen Sinterpulverpartikeln nicht erreicht werden. Unter der beanspruchten von der regelmäßigen Kugelform abweichenden knolligen Form werden solche Pulverpartikel verstanden, die zwar nicht kugelig sind, jedoch keine Kanten und Hinterschnitte aufweisen wie etwa irreguläre spratzige Pulverpartikel, die in bizarren Strukturen erstarrt sind, sondern eine gleichwohl verrundete Gestalt jedoch mit einem Durchmesserverhältnis oder Längen/Breitenverhältnis von etwa 1,5 - 3. Die ideale Kugelform hat ein Durchmesserverhältnis von 1, in der Praxis liegen der überwiegendste Teil der kugeligen Pulverpartikel in einem Bereich von 1- 1,1. Möglicherweise verhält sich ein knolliges Sinterpulver der hier gegebenen Zusammensetzung beim zunächst porösen Aufsintern und anschließenden Verdichten anders als ein sehr regelmäßiges kugeliges Sinterpulver.

Es zeigte sich aber auch, dass bei der Ausbildung der Lagermetallschicht die Verwendung einer einzigen Art von Pulverpartikeln, also nur einer Zusammensetzung, wesentlich ist, um eine möglichst homogene Festigkeit innerhalb der Lagermetallschicht zu erreichen, die maßgeblich durch die Anbindungsbereiche der Pulverpartikel aneinander bestimmt sein muss.

Die knollenförmigen metallischen Pulverpartikel zur Bildung der dichtegesinterten Lagermetallschicht haben vorteilhafterweise eine charakteristische Korngröße von 40 - 75, insbesondere von 40 - 65 µm. Unter der charakteristischen Korngröße wird derjenige Größenwert in µm verstanden, bezüglich dem 50 Massen-% einer betrachteten Charge eine größere Korngröße aufweisen bzw. schwerer sind und 50 Masse-% eine geringere Korngröße aufweisen bzw. leichter sind. Es handelt sich also um eine mittlere Partikelgröße. Die Korngrößenverteilung wird durch Siebrückstandsuntersuchungen für eine betreffende Charge bestimmt. Das Ergebnis von Siebrückstandsuntersuchungen kann entweder (nicht kumuliert) in Massen-% für eine jeweilige Maschenweite angegeben werden oder kumuliert nach DIN ISO 4497 (so dass bei der geringsten Maschenweite nahezu 100 Massen-% ermittelt wird). Der kumulierte Siebrückstand kann durch eine Verteilungsfunktion angegeben werden, nämlich

$$R = e^{-\left(\frac{t}{\eta}\right)^{\beta}}$$

R = kumulierter Siebrückstand
t = Maschenweite
η = charakteristische Korngröße
β = Formparameter (=Steigung der Geraden bei logarithmischer Auftragung nach DIN 66 145).

Eine bevorzugte Korngrößenverteilung ist gekennzeichnet durch einen Formparameter β von 1,2 - 2,6 und eine charakteristische Korngröße im oben angegebenen Bereich.

Zur Herstellung der Trägerschicht werden vorzugsweise knollige Pulverpartikel eingesetzt, die eine Fülldichte von 5,1 - 5,5 aufweisen. Unter der Fülldichte eines spezifischen Pulvermaterials (einer Charge) wird bei einer Befüllung eines vorgegebenen Volumens durch lose Schüttung des Pulvers derjenige Faktor verstanden, der multipliziert mit derjenigen Masse von Wasser, die dasselbe Volumen ausfüllen würde, die Masse des Pulvers ergibt. Bei Ausfüllung eines Volumens von 100 cm³ durch ein lose geschüttetes Pulver würde sich somit eine Masse des Pulvers von 510 - 550 g ergeben. Dieser Wert der Fülldichte hängt bei gegebener Legierungszusammensetzung (und somit gegebenem spezifischem Gewicht) von der Geometrie des Pulvers ab.

Bevorzugte Zusammensetzungen der Pulverpartikel ergeben sich aus den weiteren Patentansprüchen.

Eine bevorzugte Legierungszusammensetzung für die Herstellung der zur Bildung der dichtgesinterten Lagermetallschicht verwandten Pulverpartikel ist eine CuSn10Bi8-Legierung.

**Patentansprüche**

1. Gleitlagerwerkstoff mit einer metallischen Stützschicht und einer metallischen bleifreien Lagermetallschicht aus dichtgesinterten Pulverpartikeln aus Zinnbronze mit Zusätzen von Wismut, **dadurch gekennzeichnet, dass** die Lagermetallschicht aus einem Sinterpulver gebildet ist, welches aus Pulverpartikeln der Zusammensetzung 9,5 - 11 Gew.-% Zinn, 7 - 13 Gew.-% Wismut, 0 - 4,0 Gew.-% Zink und Rest Kupfer und gegebenenfalls verunreinigungsbedingte Zusätze in der Gesamtmenge von weniger als 1 Gew.-% gebildet ist, und dass die Pulverpartikel eine von der regelmäßigen Kugelform abweichende knollige Form jedoch ohne Kanten und Hinterschnitte aufweisen.

2. Gleitlagerverbundwerkstoff nach Anspruch 1, **dadurch gekennzeichnet, dass** die Korngrößenverteilung der metallischen Partikel eine charakteristische Korngröße von 40 - 75 μm, insbesondere von 40 - 60 μm aufweist.

3. Gleitlagerverbundwerkstoff nach Anspruch 1 oder 2, **dadurch gekennzeichnet, dass** die Korngrößenverteilung der metallischen Partikel durch einen Formparameter β von 1,2 - 2,6 bezeichnet ist.

4. Gleitlagerwerkstoff nach Anspruch 1,2 oder 3, **dadurch gekennzeichnet, dass** die Pulverpartikel 7 - 11 Gew.-% Wismut umfassen.

5. Gleitlagerwerkstoff nach Anspruch 4, **dadurch gekennzeichnet, dass** die Pulverpartikel 7,5 - 10 Gew.-% Wismut umfassen

6. Gleitlagerwerkstoff nach einem oder mehreren der vorstehenden Ansprüche, **dadurch gekennzeichnet, dass** die Pulverpartikel 9,5 - 10,5 Gew.-% Zinn umfassen.

7. Gleitlagerbuchse oder -schale, insbesondere Pleuellagerbuchse- oder Pleuellagerschale oder Hauptlagerschale, hergestellt aus einem Gleitlagerverbundwerkstoff nach einem oder mehreren der vorstehenden Ansprüche.

**Claims**

1. Slide bearing material comprising a metallic support layer and a metallic, lead-free bearing metal layer of densely sintered powder particles of tin bronze with bismuth additives, **characterized in that** the bearing metal layer is formed from a sintering powder which is made from powder particles comprising 9,5 to 11 weight-% of tin and 7 to 13 weight-% of bismuth, 0 to 4,0 weight-% of zinc and optionally impurities in a total less than 1 weight-% and the rest being copper, wherein the powder particles have a bulbous shape, differing from a regular spherical shape, but without edges and undercuts.

2. Slide bearing composite material according to claim 1, **characterized in that** the grain size distribution of the metallic particles has a characteristic grain size of 40 to 75 μm, in particular of 40 to 60 μm.

3. Slide bearing composite material according to claim 1 or 2, **characterized in that** the grain size distribution of the metallic particles is **characterized by** a shape parameter β of 1,2 to 2,6.

4. Slide bearing material according to claim 1, 2 or 3, **characterized in that** the powder particles comprise 7 to 11 weight-% of bismuth.

5. Slide bearing material according to claim 4, **characterized in that** the powder particles comprise 7,5 to 10 weight-% of bismuth.

6. Slide bearing material according to any one or more of the preceding claims, **characterized in that** the powder particles comprise 9,5 to 10,5 weight-% of tin.

7. Slide bearing bushing or shell, in particular, a connecting rod bearing bushing or connecting rod bearing shell or a main bearing shell, produced from a slide bearing composite material according to any one or more of the preceding claims.

**Revendications**

1. Matériau pour palier lisse avec une couche d'appui métallique et une couche métallique en métal antifriction sans plomb formée de particules de poudre de bronze ordinaire et de bismuth frittées à densité maximale, **caractérisé en ce que** la couche de métal antifriction est formée d'une poudre frittée consistant en particules de poudre composées de 9,5 à 11 % en poids d'étain, 7 à 13 % en poids de bismuth, 0 à 4,0 % en poids de zinc et, pour le reste, de cuivre et éventuellement d'éléments additionnels dus aux impuretés à concurrence de moins de 1 % en poids, et **en ce que** les particules de poudre affectent une forme noduleuse divergeant de la forme sphérique régulière, sans présenter toutefois d'arête ou de contre-dépouille.

2. Matériau composite pour palier lisse selon la revendication 1, **caractérisé en ce que** la distribution granulométrique des particules métalliques présente une grosseur de grain caractéristique comprise entre 40 et 75 μm, notamment entre 40 et 60 μm.

3. Matériau composite pour palier lisse selon la revendication 1 ou la revendication 2, **caractérisé en ce que** la distribution granulométrique des particules métalliques est décrite par un paramètre de forme β compris entre 1,2 et 2,6.

4. Matériau pour palier lisse selon la revendication 1, 2 ou 3, **caractérisé en ce que** les particules de poudre contiennent 7 à 11 % en poids de bismuth.

5. Matériau pour palier lisse selon la revendication 4, **caractérisé en ce que** les particules de poudre contiennent 7,5 à 10 % en poids de bismuth.

6. Matériau pour palier lisse selon une ou plusieurs des revendications précédentes, **caractérisé en ce que** les particules de poudre contiennent 9,5 à 10,5 % en poids d'étain.

7. Coussinet lisse ou coquille de coussinet lisse, notamment coussinet de pied de bielle ou coquille de coussinet de pied de bielle ou coquille de palier principal, fabriqué à partir d'un matériau composite pour palier lisse selon une ou plusieurs des revendications précédentes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03031102 A1
- EP 0687740 B1
- EP 0224619 B1